# EUROPEAN PATENT SPECIFICATION

(11) **EP 0 393 731 B1**
(45) Date of publication and mention of the grant of the patent: **15.12.1993**
(21) Application number: 90200496.9
(22) Date of filing: 02.03.1990
(51) Int. Cl.: C04B 7/47, F27D 15/02

(54) **Process for preparing a substance with hydraulic binding properties and substance prepared with this process**
Verfahren zur Herstellung einer hydraulisch abbindenden Substanz und die mittels diesem Verfahren erhaltene Substanz
Procédé pour la préparation d'une substance hydrauliquement durcissable et substance ainsi préparée

(30) Priority: 21.04.1989 NL 8901003
(43) Date of publication of application: 24.10.1990
(73) Proprietor: KOREL N.V., NL-6211 NE Maastricht (NL)
(72) Inventor: van Eyndhoven, Franciscus Henricus Mathieu, NL-6231 KM Meerssen (NL); Lammerinks, Cornelis Gerardus Henry, NL-5583 CB Waalre (NL); Niel, Egid Marie Mathieu, Prof. Dr. Ir., NL-6217 KM Maastricht (NL)
(74) Representative: Timmermans, Anthonius C.Th., Ir.

(56) References cited:
- EP-A- 0 019 338
- FR-A- 2 431 466
- GB-A- 2 347
- GB-A- 1 556 788
- JAPANESE PATENTS GAZETTE, week 8414, 16th May 1984, section Ch, class L, page 30, no. 84-085569/14, Derwent Publications Ltd, London, GB; & JP-A-59 035 608 (SUMITOMO METAL IND.)
- JAPANESE PATENTS REPORT, vol. V, no. 28, 14th August 1973, class L, page 6, no. 39929V, Derwent Publications Ltd, Londres, GB; & JP-B-73 22 976 (ASAHI GLASS CO., LTD)

## Description

The invention relates to a process for preparing a powdery substance with hydraulic binding properties, based on a material which in free or bound condition contains CaO, SiO₂ and Al₂O₃, said material being melted in a vessel at a temperature of between 1400°C and 1550°C, while adding said compounds or other compounds if desired, so that the result is a melt being composed of 33 - 52 m% of CaO, 9 - 25 m% of Al₂O₃ and 23 - 45 m% of SiO₂, with a minor share of other compounds, said melt being tapped, cooled and refined. If desired an activating substance is added to the final product.

The invention also relates to a powdery hydraulic binding agent, prepared according the process of the invention. The invention furthermore relates in particular to the use of fly ash emanating from coal-fired installations; it is not limited to the use of said fly ash, however.

When hereinafter reference is made to fly ash emanating from coal-fired installations, also other residual substances are meant, such as residue from burning waste, other fly ashes, cleaned steel grit, sewage sludge, asbestos, metallic slags, dredged material and other substances containing impurities.

### Prior art

The above method is known from EU-O 019 338 and is described in detail therein, likewise without limiting the invention to fly ash. With regard to cooling the molten material into a solid substance several possibilities are described, without connecting specific requirements or advantages thereto.

The known method of cooling a melt in water is obvious. A disadvantage is, however, that the heat released when this manner of cooling is applied cannot be utilized optimally. This is the case which is described in the method according to GB-1 248 061, whereby there is question of fast cooling of a slag by cooling in water. This manner of cooling is also mentioned in GB-1 556 788.

### Aim of the invention

The aim of the present invention is to achieve a better utilization of the energy required for carrying out the method mentioned in the preamble, resulting in a more economical method, both from an energy point of view and from a view of dimensioning and optimizing the size of the melting vessel, or the method of heating the material supplied, as the case may be, while obtaining optimum results.

### Disclosure of the invention

Put first and foremost, the melt must not crystallize when cooling down, but it is to remain in a glassy state. Undesired crystallization leads to a final product which is not usable. With cooling and granulation in water this does not present a problem, but from an energetic point of view water should be avoided as a cooling agent.

From the literature it is known that slags for preparing blast furnace slag cement (and also for alkali slag cement, therefore), should have a high glass content for a good reactivity. All this is based on the following observations:
a. the reactivity of a slag (or a fly ash) having a fixed chemical composition decreases along with the glass content. This was confirmed through experiments according to the method disclosed in EU-0 019 338. With a glass content of 95% of the final product the strengths of objects manufactured therewith are 5% lower than with a product with 100% glass phase;
b. the reactivity of the product increases with a glass content between 100 and 95% and then slowly decreases, all this in a manner such as is put forward in E. Demoulian, P. Gourdin, F. Hawthorn, C. Vernet: "Influence de la composition chimique et de la texture des laitiers sur leur hydraulicité", Proceedings of the 7th International Congress on the Chemistry of Cements, Vol. II, Theme III, pp. 89 et seq., Paris 1980.

From an energetic point of view air is more eligible for cooling of the melt than water. Indeed, air which may be strongly heated by the release of heat when the tapped melt is being cooled, can be used in several manners in the process. Among other things, but not exclusively, for pre-heating the material to be supplied to the melting vessel to a relatively high temperature. As a result both the melting energy to be supplied is reduced and /or the dimensioning and/or the time during which the material is present in the melting vessel can be reduced. In this manner the aim of the invention can be realised, but also other possibilities of utilizing the hot air remain open.

Cooling tapped melt with air has both practical and constructive drawbacks, however. As already said before, crystallization of the cooled melt should be avoided, and this is difficult to realize with only a simple air cooling.

According to the invention this problem can be controlled without difficulty when the tapped melt is cooled under controlled conditions by leading it through the rolls of a roll cooler (calender) until a temperature of between 500°C and 1000°C is reached, after which the solidified mass is broken and further cooled with air. It has become apparent that with a temperature of about 700°C the solidified mass does not show any evidence of crystallization yet.

The calendered and solidified melt is therefore broken and further cooled with air in a suitable device. Calendering has a certain advantage hereby. The solidified material can namely be broken, in a relatively simple manner, into particles which are not too fine but which have a relatively even size, said particles lending themselves quite well for cooling with air.

Determining parameters are hereby:
a. the quantity of air to be led through and being required in the entire process, and its temperature;
b. the size of the broken solid particles after the calender rolls;
c. of course the equipment to be used.

Preferably the broken particles are about 0.5 to 1 mm thick, 5 to 50 mm long and 5 to 20 mm wide. Said dimensions are not critical and are i.a. dependent on the cooling equipment to be used.

The process according to the invention of converting fly ash into a powdery hydraulic binding agent of course comprises, besides the manner of cooling the melt with recuperation of heat proposed for the economical version, a number of steps substantially consisting of:
a: preparation of the fly ash to be melted and chemically adapted;
b: melting said material and cooling according to the process of the invention;
c: followed by an after-treatment of said material in order to give said material the desired fineness and further specifications;
d: adding an activating substance, if desired.

The preparation may consist of a method such as described in NL-862103, whereby the carbon occluded in the fly ash can burn out. The heat released may i.a. be utilized for dissociating CaCo₃ into CaO. This does not mean that a heat supply from the hot cooling air would not further enhance the efficiency of the process. It is also possible to pre-heat the cold fly ash, e.g. in a whirl bed, by means of hot air, as well as CaCO₃, whether or not accompanied by decomposition into CaO.

The hot air may also be utilized in heating the mass to be melted. The design of the melting vessel must be adapted for this, but this does not fall within the framework of the present invention. Likewise the grinding to the desired specifications of the still relatively coarse lumps or chips of the solidified mass exiting from the cooling rolls under conditioned circumstances is a step which is known per se. All this does not exclude that the preparatory steps, as well as the final operation, comprise functional aspects which are new by themselves and which are related to each other, the selection of said aspects being relatively free, however.

The present invention is not limited to one essential step, therefore, viz. the method of cooling the melt in two steps under controlled and controllable circumstances, which method is not obvious. Cooling the molten mass with air, while preventing crystallization by using cooling rolls, and re-using the released heat is essential. Cooling by means of rolls is mentioned in GB-1,556,788, but essentially different rolls are meant here, such as the ones which are used in the production of glass wool.

Finally it is noted that in the glass industry it is known to cool a glass melt to a solid plate by calendering. It is not obvious to utilize this method, which is known per se, for an entirely different purpose, viz. making a useful heat recuperation possible.

### Powdery substance obtained according to the invention

The invention also extends to a powdery substance with hydraulic properties, said substance being prepared from fly ash emanating from combustion installations fired with coal, which fly ash has been melted and brought to the correct chemical specification if desired, after which the melt has been cooled and further ground. The invention extends to the effect that the cooling of the melt is effected by means of a roll cooler under controlled circumstances to a temperature of between 500°C and 1000°C, after which the material thus treated is broken and further cooled with air to be subsequently ground, whereby the heated cooling air is utilized in the device for preparing the substance.

As an activating substance, which by itself is indispensable and is added if desired, a substance having an alkaline reaction is utilized, such as NaOH, Ca(OH)₂ and the like.

### Numerical example of the invention

The invention is further explained by means of a numerical example. Equal quantities of a 100% vitriform ground slag having a composition as described in the preamble were heated in an oven to high temperatures and stayed there 1, 5, 15 and 30 minutes respectively. The temperatures were 1100, 900, 800 and 700°C. Afterwards the slags were cooled in the air. In total 16 samples were evaluated. The time during which the melt stayed in the oven at the high temperature represents that temperature as a quenching temperature between the cooling rolls. The samples which remained at a high temperature for 30 minutes were all evaluated Röntgen-diffractographically for crystallization.

After having stayed at 1000°C or 900°C for 30 minutes the solidified mass appeared to be completely crystallized; after having stayed at 800°C a maximum of 5% appeared to have crystallized and after 30 minutes at 700°C no crystallization occurred. With a visual evaluation of the solidified melt it appeared moreover that at 1100°C said melt already had a crystallized Ca-silicate appearance, whilst with a visual evaluation of the 900°C melt the crystal content strongly increased from 1 to 30 minutes.

Assuming that after quick cooling of the synthetic melt between cooling rolls said synthetic melt further cools in the air relatively slowly, it should be taken into account that especially the core remains at a higher temperature for another 5 to 10 minutes. Therefore it is to be recommended to use the results of crystallization after 30 minutes. This means that a quick cooling to about 700°C is necessary in order to obtain a product which is more than 98% vitriform. Concretely it can be stated that the quick cooling to said 700°C should take place within 0.5 to 30 minutes. Cooling with air will take between 0.5 and 5 hours.

### Example of an embodiment of a device according to the invention

Finally the invention will be explained by means of an example of an installation for carrying out the process according to the invention. Although this example embodies the essence of the invention, the present invention is not limited to said example and to fly ash, and variants are possible. The example shows a drawing. According to this drawing fly ash is supplied to an air separator 2 at 1, where said fly ash is separated into a coarse and a fine fraction, by separating at an adjustable particle size which may vary between 5 µm and 75 µm. The coarse fraction 3 is supplied to a pre-heating system 4 and is heated therein to a temperature of about 1000°C, whereby use is made as much as possible of the carbon present in the fly ash for the energy supply.

Another raw material, viz. limestone, is supplied to the pre-heating system at 3. The substances are heated to the temperature mentioned, whereby the limestone is converted into CaO.

A suitable pre-heating system for this is possibly a circulating whirl bed; other systems, by means of which the raw material(s) is (are) pre-heated, are also possible, however. Thus the raw materials mentioned, fly ash and limestone, can be pre-heated in separate systems which are suitable for that purpose.

Fuel is supplied to the pre-heating system at 5. Pre-heated combustion air, which also serves as a fluidization medium, is supplied to the circulating whirl bed at 6, with a temperature of 100 - 600°C. Said temperature is reached by means of a heat exchanger 13 elsewhere in the process.

The pre-heated substances are then supplied to a melting furnace 8 at 7. In said melting furnace 8 the substances are further heated up, in mixed condition, to a temperature of about 1450°C, whereby a melt is formed having the required composition of 33 - 52 m% of CaO, 9 - 25 m% of Al₂O₃ and 23 - 25 m% of SiO₂. If desired aggregates, containing Al, Si or Ca, are added in order to reach the required composition. The supply of energy for forming the melt in the melting furnace 8 takes place entirely electrically in principle; it may also take place in combination with gas, oil or coal combusters or by said combusters alone.

The melt exits from the melting furnace at 9, having a temperature of about 1450°C, and is then cooled quickly (quenched) between calender rolls 10, by indirect cooling with water. As already mentioned before said operation is very important in order to prevent crystallization in the cooled material and to enable the subsequent breaking into splinters. Dependent on the mixture the temperature to be reached after cooling will have to amount to 500 - 1000°C, preferably to about 700°C.

At 11 the solidified mixture exits from the roll cooler as a glassy plate having a thickness between 0.5 and a few mm, and is then broken, in a continuously operating breaking device, into splinters being about 0.5 - 1 mm thick, 5 - 50 mm long and 5 - 20 mm wide. Subsequently said glass splinters are further directly cooled with air in a heat exchanger 13 suitable for that purpose. Suitable systems for this purpose are e.g. a packed-bed heat exchanger or a closed vibratory trough conveyor. The cooling air 13A is thereby heated to a temperature of between 100°C and 600°C. Said pre-heated air is then supplied to the pre-heating system at 6, which contributes positively towards the energetic efficiency of the system.

The glass splinters exit from the heat exchanger at 14 having a temperature of about 50°C, and are supplied to a suitable grinding system 16 at 15, in order to be ground to the required fineness of about 7500 cm²/gram. Suitable grinding systems for this purpose are e.g. roller mills, ball mills, or a combination of the two, provided with an air separator for separating the ground material having the required particle size. The ground material is then mixed with the fine fraction of the fly ash and with one or more activating substances in a mixer 17 for solid matter. The mixture is subsequently stored in storage hoppers 18 and can be delivered from there as a final product 20, as a bulk product or packed in sacks via a packing installation.

Finally it is noted that the melting vessel mentioned before may also comprise a rotary furnace.

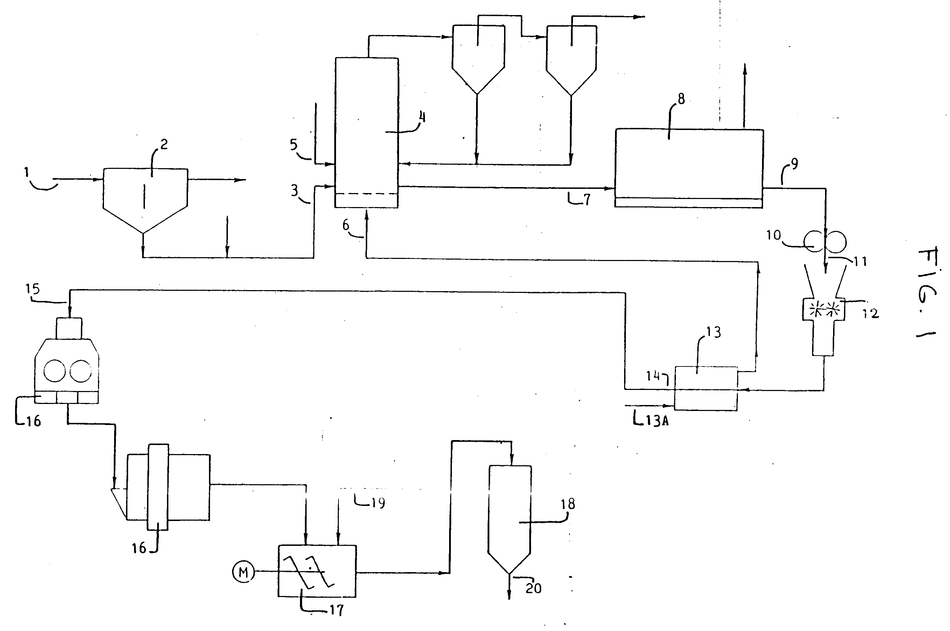

## Claims

1. Process for preparing a powdery substance with hydraulic binding properties, based on a raw material containing the CaO, SiO₂ and Al₂O₃, said raw material being melted in a vessel at a temperature of between 1400°C and 1550°C, while adding said compounds or other compounds such as fly ash from coal-find installations or other fly ashes, residues from burning waste, cleaned steel grit, sewage sludge, asbestos, metallic slags or dredged material, so that the result is a melt being composed of 33 - 52% of CaO, 9 - 25 m% of Al₂O₃ and 23 - 45 m% of SiO₂, said melt being tapped, cooled and refined, and whereby the tapped melt is cooled by leading it through the rolls of a roll cooler (calender)until a temperature of between 500°C and 1000°C is reached, after which the solidified mass of rolled chips is broken to a size of about 0.5 to 1 mm thick, 5 to 50 mm long and 5 to 20 mm wide and further cooled with air and whereby the heated cooling air is utilized in the process.

2. Process for preparing a powdery substance with hydraulic binding properties according to claim 1, characterized in that a temperature of about 700°C is set by quenching in a roll cooler.

3. Process for preparing a powdery substance with hydraulic binding properties according to claims 1 or 2, characterized in that after having been heated the cooling air is utilized for pre-heating the raw materials.

4. Process for preparing a powdery substance with hydraulic binding properties according to claims 1 - 3, characterized in that said cooling to a minimum temperature of 500°C takes place within 0.5 - 30 minutes, and that the cooling with air takes place within 0.5 - 5 hours.

5. Process for preparing a powdery substance with hydraulic binding properties according to any one of the preceding claims, characterized in that as an activating substance a substance having an alkaline reaction is added to the final product.

6. Process according to any one of the preceding claims, characterized in that the raw material is melted in a vessel formed as a rotary furnace.

## Patentansprüche

1. Verfahren zur Herstellung eines pulverförmigen Stoffs mit flüssigkeitsbindenden Eigenschaften, basierend auf einem Material, das in freiem oder gebundenem Zustand CaO, SiO₂ und Al₂O₃ enthält, wobei das genannte Material in einem Gefäß bei einer Temperatur zwischen 1400 °C und 1550 °C geschmolzen wird, während dem die besagten Stoffe oder andere Stoffe, wie Flugasche aus kohlengefeuerten Anlagen, anderen Flugaschen, Müllverbrennungsrückstände, gereinigter Stahlstaub, Kanalisationsschlamm, Asbest, metallartige Schlacken oder Baggermaterial beigegeben werden, so daß als Ergebnis eine Schmelze entsteht, die aus 33 - 52 m% CaO, 9 - 25 m% Al₂O₃ und 23 - 45 m% SiO₂ besteht, wonach die vorgenannte Schmelze abgelassen, gekühlt und gereinigt wird, und wobei die abgelassene Schmelze gekühlt wird, indem sie durch die Rollen eines Rollenkühlers (Kalanderwalze) geführt wird, bis eine Temperatur zwischen 500 °C und 1000 °C erreicht wird, wonach die erhärtete Masse aus gerollten Splittern auf eine Größe von etwa 0,5- 1 mm Dicke, 5 - 50 mm Länge und 5 - 20 mm Breite gebrochen und weiter mit Luft gekühlt wird, wonach die erwärmte Kühlluft in dem verfahren genutzt wird.

2. Ein Verfahren zur Herstellung eines pulverförmigen Stoffs mit flüssigkeitsbindenden Eigenschaften nach Anspruch 1, dadurch gekennzeichnet, daß eine Temperatur von etwa 700 °C durch Schrecken in einem Rollenkühler erreicht wird.

3. Ein Verfahren zur Herstellung eines pulverförmigen Stoffs mit flüssigkeitsbindenden Eigenschaften nach Anspruch 1 oder 2, dadurch gekennzeichnet, daß die Kühlluft, nachdem sie erwärmt worden ist, zum Vorerwärmen der Grundstoffe verwendet wird.

4. Ein Verfahren zur Herstellung eines pulverförmigen Stoffs mit flüssigkeitsbindenden Eigenschaften nach Anspruch 1 bis 3, dadurch gekennzeichnet, daß besagtes Kühlen auf eine Mindesttemperatur von 500 °C innerhalb von 0,5 bis 30 Minuten erfolgt und daß die Kühlung mit Luft innerhalb von 0,5 - 5 Stunden geschieht.

5. Ein Verfahren zur Herstellung eines pulverförmigen Stoffs mit flüssigkeitsbindenden Eigenschaften nach jedem der vorigen Ansprüche, dadurch gekennzeichnet, daß als Aktivierungsstoff ein Stoff beigefügt wird, der dem Endprodukt alkalische Reaktion verleiht.

6. Ein Verfahren nach jedem der vorgenannten Ansprüche, dadurch gekennzeichnet, daß die Grundmaterialien in einem Gefäß geschmolzen werden, das als rotierender Ofen ausgelegt ist.

## Revendications

1. Procédé pour la préparation d'une substance hydrauliquement durcissable, basé sur une matière première comprenant du CaO, du SiO₂ et de l'Al₂O₃, ladite matière de base étant fondue dans un récipient à une température entre 1400°C et 1550°C, alors que lesdites substances, ou d'autres substances comme des cendres volantes provenant d'installations à charbon, d'autres cendres volantes, de la cendre provenant de l'incinération des ordures, des débris d'acier nettoyés, des boues d'égout, de l'asbeste, des scories métalliques ou de la matière de dragage sont ajoutées de manière à avoir pour résultat une masse fondue comprenant 33 à 52 m% de CaO, 9 à 25 m% d'Al₂O₃ et 23 à 45 m% de SiO₂, cette masse fondue étant ensuite vidangée, refroidie et purgée, la masse fondue vidangée étant refroidie en la conduisant à travers un refroidisseur à rouleaux (calandre) jusqu'à obtenir une température entre 500°C et 1000°C, la masse solidifiée de fragments roulés étant ensuite brisée en des fragments d'une épaisseur de 0,5 à 1 mm, d'une longueur de 5 à 50 mm et d'une largeur de 5 à 20 mm environ et encore refroidie par air, l'air de refroidissement maintenant chauffé étant utilisé dans le procédé.

2. Procédé pour la préparation d'une substance hydrauliquement durcissable selon la revendication 1, caractérisé en ce qu'une température de 700°C environ est atteinte par trempe dans un refroidisseur à rouleaux.

3. Procédé pour la préparation d'une substance hydrauliquement durcissable selon la revendication 1 ou 2, caractérisé en ce que l'air de refroidissement, après être chauffé, est utilisé pour le préchauffage des matières premières.

4. Procédé pour la préparation d'une substance hydrauliquement durcissable selon les revendications 1 à 3, caractérisé en ce que ledit refroidissement jusqu'à une température minimum de 500°C se fait en 0,5 à 30 minutes, et en ce que le refroidissement par air se fait en 0,5 à 5 heures.

5. Procédé pour la préparation d'une substance hydrauliquement durcissable selon chacune des revendications précédentes, caractérisé en ce qu'en tant que matière d'activation, une matière entrant en réaction alcaline est ajoutée au produit fini.

6. Procédé pour la préparation d'une substance hydrauliquement durcissable selon chacune des revendications précédentes, caractérisé en ce que les matières premières sont fondues dans un récipient réalisé comme un four rotatif.
